# EUROPEAN PATENT APPLICATION

(11) **EP 2 365 217 A1**
(43) Date of publication of application: **14.09.2011**
(21) Application number: 09775080.6
(22) Date of filing: 20.08.2009
(51) Int. Cl.: F03D 11/00, F04D 27/00

(54) **FAN DEVICE FOR WIND DRIVEN GENERATOR AND WIND DRIVEN GENERATOR**

(71) Applicant: Mitsubishi Heavy Industries, Ltd., Tokyo 108-8215 (JP)
(72) Inventor: SATO, Shinsuke, Nagasaki-shi Nagasaki 851-0392 (JP); HIRAI, Shigeto, Nagasaki-shi Nagasaki 851-0392 (JP); SATO, Toshihiro, Nagasaki-shi Nagasaki 851-0392 (JP)
(74) Representative: Intès, Didier Gérard André
(86) International application number: PCT/JP2009/064568
(87) International publication number: WO 2011/021291

(57) **Abstract**

There are provided a wind-power-generator fan unit and a wind power generator in which the consumption of driving power for a cooler fan that cools a device provided in the wind power generator can be reduced. This wind-power-generator fan includes cooler fans (22, 32, 42, and 52) that discharge air in a housing that accommodates devices that perform at least power generation by the rotational operation of rotor blades to the outside of the housing through the devices; and a control unit (76) that controls the operation of the cooler fans (22, 32, 42, and 52) on the basis of the temperatures of the devices and the operating states of the devices.

## Description

### {Technical Field}

The present invention relates to a wind-power-generator fan unit and a wind power generator.

### {Background Art}

In general, outside air temperatures at which wind power generators are operated range from -30 °C to +40 °C. Therefore, it is necessary to control the temperatures of the internal devices of the wind power generators, such as a main bearing, a gearbox, a generator, a transformer, and an inverter, within a standard temperature range.

To perform such temperature control, an oil piping system for a blade pitch system, a gearbox, a main bearing, etc. and a cooling piping system for an inverter etc. are equipped with respective heaters and coolers as a temperature control system (refer to Patent Document 1).
The coolers are provided with cooler fans for supplying air into the coolers, and the ON/OFF states of the heaters and the cooler fans are individually controlled on the basis of set temperatures (for example, refer to Patent Document 1).

### {Citation List}

### {Patent Literature}

### {PTL 1}

Japanese Unexamined Patent Application, Publication No. Sho 58-065977

### {Summary of Invention}

### {Technical Problem}

However, the method of individually controlling the plurality of cooler fans on the basis of the temperatures of the devices to be cooled, as described above, has the problem of excessive consumption of driving power for the cooler fans.

For example, for control based on only the temperatures of the devices, it is difficult to suitably control the driving of the cooler fans, and the temperatures of the devices go out of controlled temperature ranges, causing overheating or overcooling.
This causes a problem in that larger driving power is supplied to the cooler fans to cool the thus-overheated devices, resulting in larger driving power. On the other hand, the overcooled state is a state caused when the cooler fans continue to cool devices that do not need to be cooled. That is, this is a state caused when the cooler fans wastefully consume driving power, which causes the problem of excessive consumption of driving power.

The present invention is made to solve the above-described problems, and it is an object thereof to provide a wind-power-generator fan unit and a wind power generator in which the consumption of driving power for cooler fans that cool the devices provided in the wind power generator can be reduced.

### {Solution to Problem}

The present invention provides the following solutions to achieve the above-described objects.
A wind-power-generator fan unit according to a first aspect of the present invention includes a cooler fan that discharges air in a housing, which accommodates a device that performs at least power generation by rotational operation of rotor blades, to outside of the housing through the device; and a control unit that controls operation of the cooler fan on a basis of a temperature of the device and an operating state of the device.

According to the first aspect of the present invention, the control unit can estimate the amount of heat generated in the device from the operating state of the device. Therefore, the control unit can estimate changes with time in the temperature of the device, that is, the temperature gradient of the device, on the basis of the temperature and the operating state of the device.
By controlling the operation of the cooler fan on the basis of the estimated temperature gradient of the device, the operation of the cooler fan can be suitably controlled as compared with the control method based on only the temperature of the device. For example, a delay in cooling shutdown by the cooler fan, that is, overcooling of the device, can be prevented. In other words, unnecessary operation of the cooler fan can be prevented, and thus, the consumption of driving power for the cooler fan can be reduced.
Furthermore, a delay in cooling startup by the cooler fan, that is, overheating of the device, can be prevented. In other words, the operating time of the cooler fan can be reduced, so that the consumption of driving power by the cooler fan can be reduced.

In the first aspect of the invention, it is preferable that the control unit be configured to estimate the operating state of the device on a basis of results of measurement by an anemoscope/anemometer that measures a wind direction and a wind speed outside the housing and to control the operation of the cooler fan.

With this configuration, the control unit can ascertain the operating state of the device on the basis of the wind direction and the wind speed outside the housing and can estimate the amount of heat generated in the device.

In the first aspect of the present invention, it is preferable that the control unit be configured to estimate the operating state of the device on a basis of a rotational speed of the rotor blades and a pitch angle of the rotor blades and to control the operation of the cooler fan.

With this configuration, the control unit can ascertain the operating state of the device on the basis of the rotational speed of the rotor blades and the pitch angle of the rotor blades and can estimate the amount of heat generated in the device.

In the first aspect of the present invention, it is preferable that the control unit be configured to estimate the operating state of the device on a basis of power output from the device and to control the operation of the cooler fan.

With this configuration, the control unit can ascertain the operating state of the device on the basis of the power output from the device and can estimate the amount of heat generated in the device.

In the first aspect of the present invention, it is preferable that the cooler fan be provided for each of a plurality of the devices and that the control unit control the operation of one of the cooler fans on a basis of the operating state of another of the cooler fans.

A wind-power-generator fan unit according to a second aspect of the present invention includes a plurality of cooler fans, for a plurality of devices that performs at least power generation by rotational operation of rotor blades, that discharges air in a housing accommodating the devices to an outside of the housing through the devices; and a control unit that controls operation of one of the cooler fans on a basis of a temperature of the device and an operating state of another of the cooler fans.

According to the second aspect of the present invention, the operation of the one of the cooler fans is controlled on the basis of the operating state of the another of the cooler fans. This can prevent reduction in the cooling efficiency of the device, thus reducing the consumption of driving power for the cooler fan.

For example, in a case where the ratios of the loads of the cooler fans to the devices, that is, the ratios of the air-blowing capacities of the cooler fans to the amounts of heat generated or heat capacities of the devices, are different, the operation of one of the cooler fans with a low load ratio is controlled on the basis of the operating state of another of the cooler fans with a high load ratio. This can reduce an influence of the pressure difference (negative pressure) between the interior and the exterior of the housing caused by the operation of the another of the cooler fans during the operation of the one of the cooler fans, thereby preventing reduction in the cooling efficiency of the one of the cooler fans.

Alternatively, by controlling the operation of one of the cooler fans with a high load ratio on the basis of the operating state of another of the cooler fans with a low load ratio, influence of the pressure difference between the interior and the exterior of the housing caused by the operation of the one of the cooler fans on the operation of the another of the cooler fans can be reduced, and thus reduction in the cooling efficiency of the another of the cooler fans can be prevented.

A wind power generator according to a third aspect of the present invention includes a rotor blade that is driven by wind; a device that performs at least power generation by rotational operation of the rotor blade; a housing that accommodates the device in its interior; and a wind-power-generator fan unit according to the above-described present invention.

According to the third aspect of the present invention, since the above-described wind-power-generator fan unit of the present invention is provided, the consumption of driving power for the cooler fan of the wind power generator can be reduced.

### {Advantageous Effects of Invention}

According to the wind-power-generator fan unit and the wind power generator of the present invention, the control unit can suitably control the operation of a cooler fan as compared with the control method based on only the temperature of a device by estimating changes with time in the temperature of the device, that is, the temperature gradient of the device, on the basis of the temperature and operating state of the device and by controlling the operation of the cooler fan on the basis of the estimated temperature gradient of the device. This offers the advantage of being capable of reducing the consumption of driving power for the cooler fan that cools the device provided in the wind power generator.

### {Brief Description of Drawings}

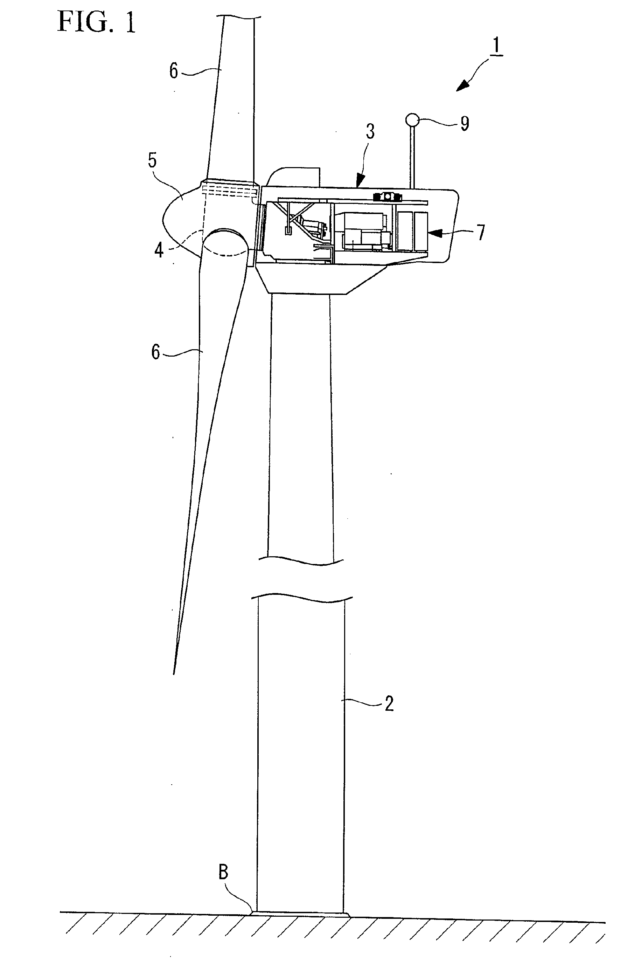

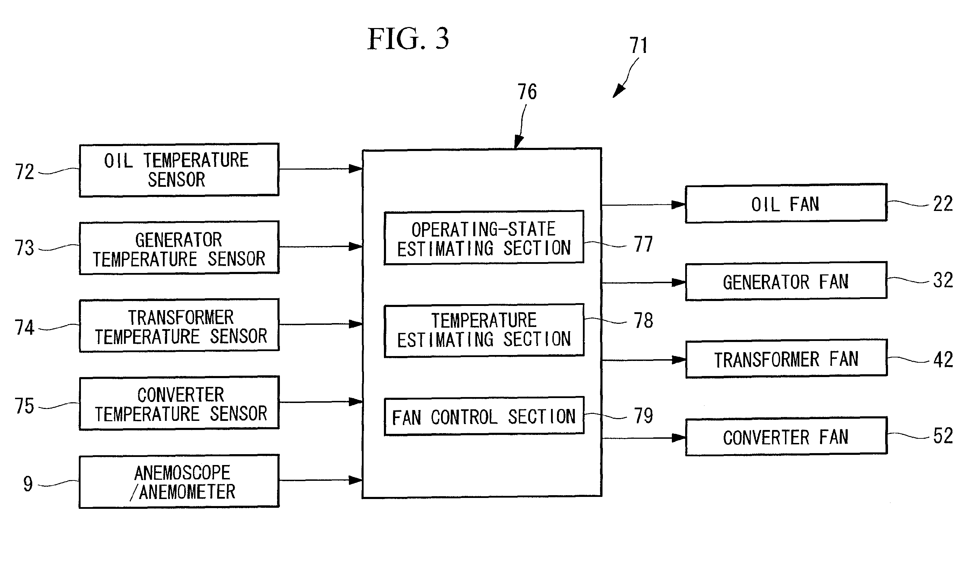

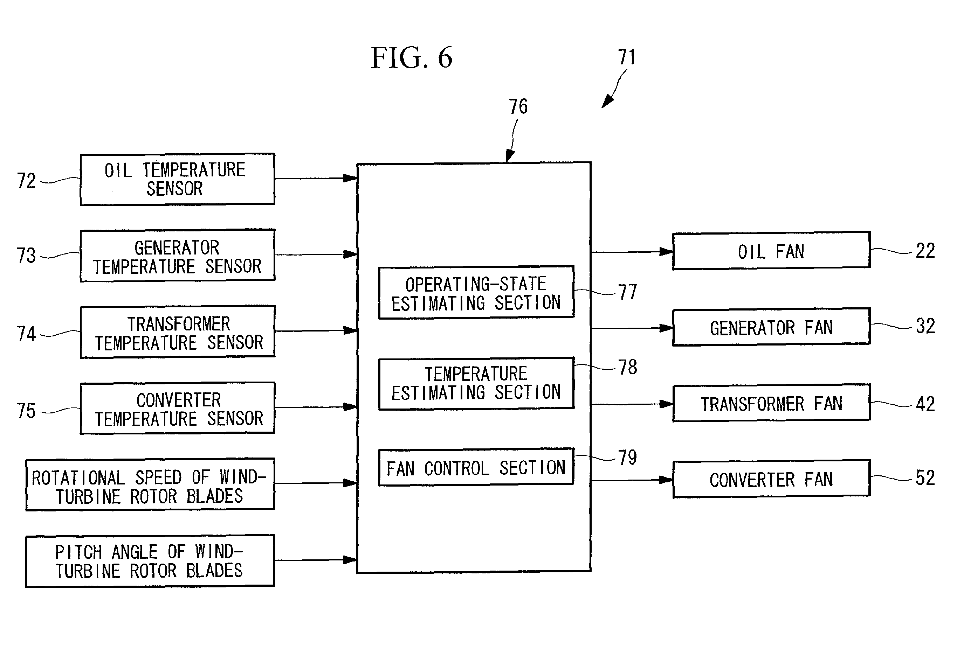

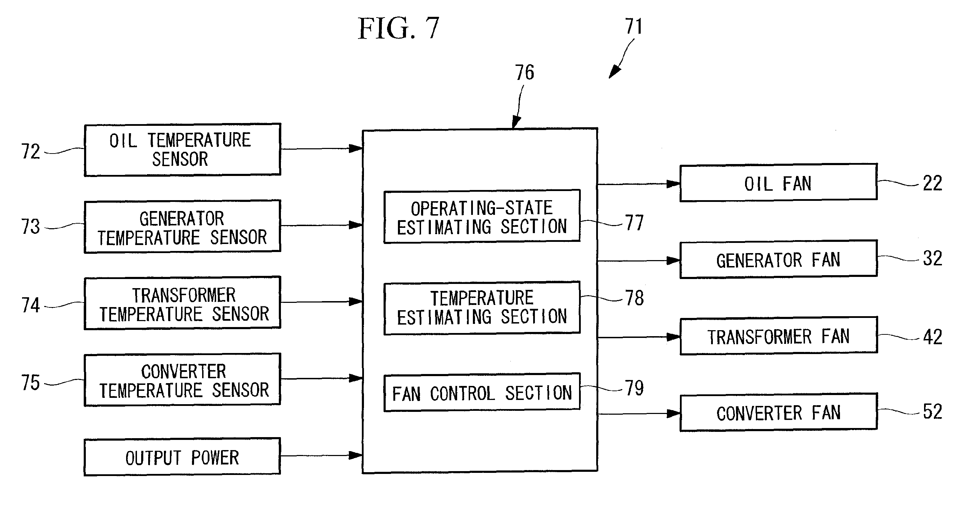

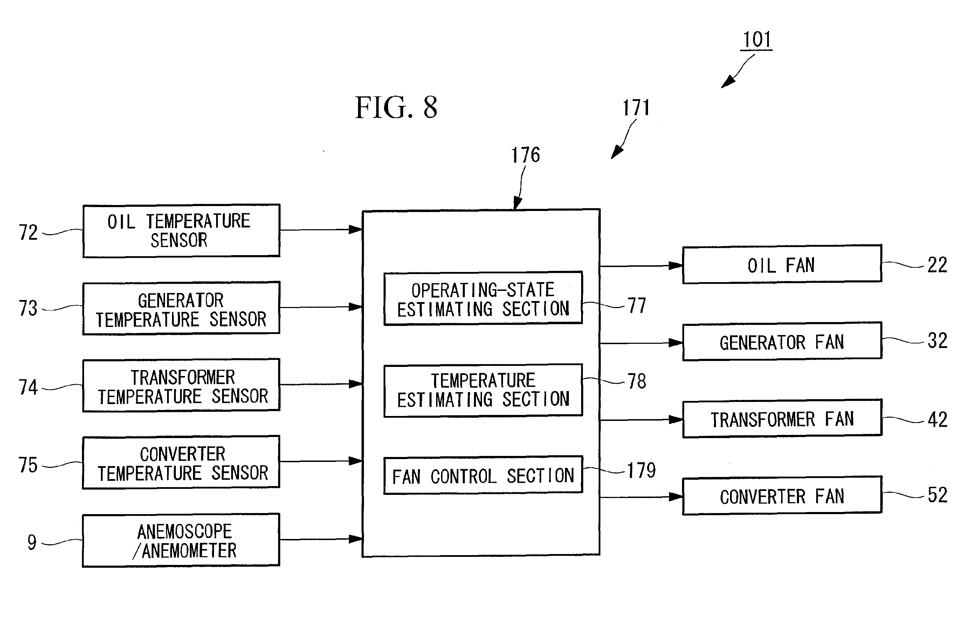

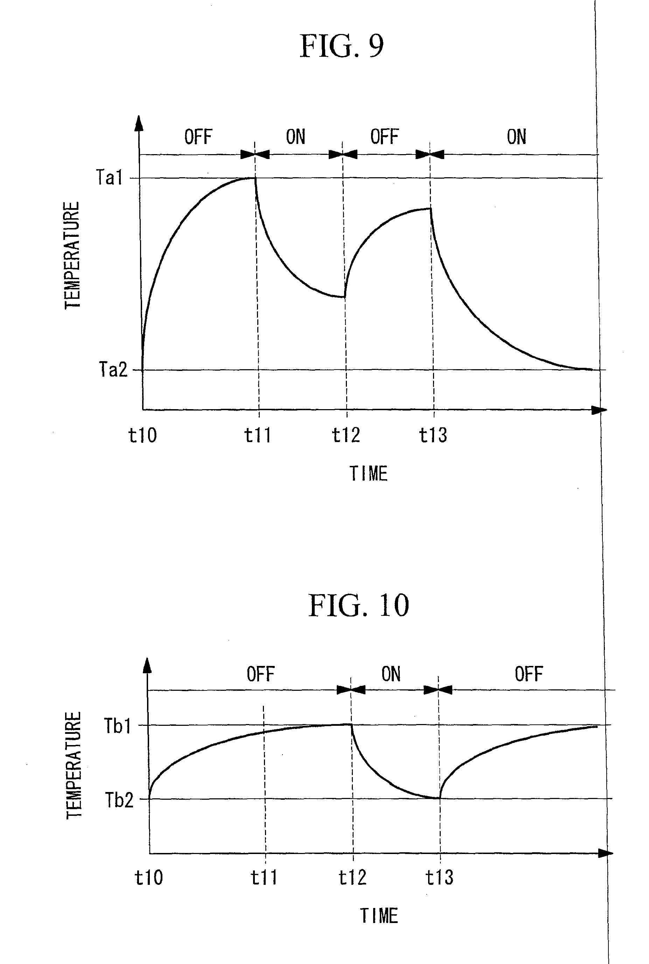

{Fig. 1}
   Fig. 1 is an overall view for explaining the configuration of a wind power generator according to a first embodiment of the present invention.
{Fig. 2}
   Fig. 2 is a schematic diagram for explaining the configuration of the interior of a nacelle in Fig. 1.
{Fig. 3}
   Fig. 3 is a block diagram for explaining the control of an oil fan, a generator fan, a transformer fan, and a converter fan in Fig. 2.
{Fig. 4}
   Fig. 4 is a flowchart for explaining the control of a wind-power-generator fan unit in Fig. 3.
(Fig. 5}

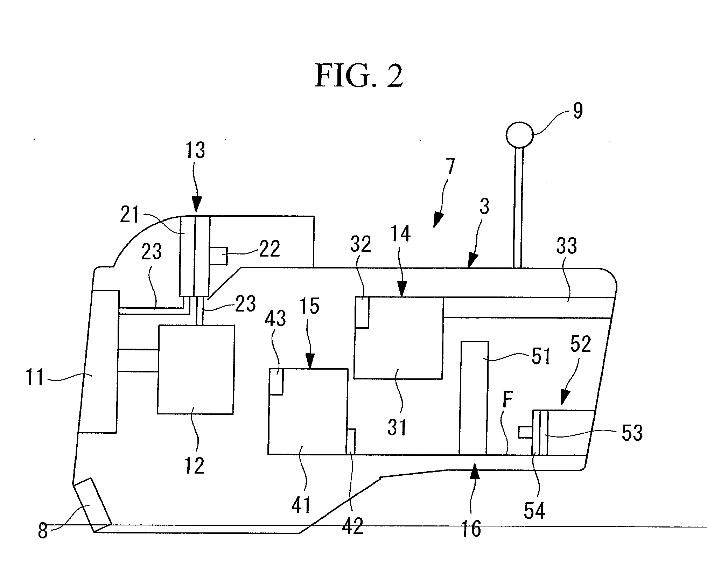

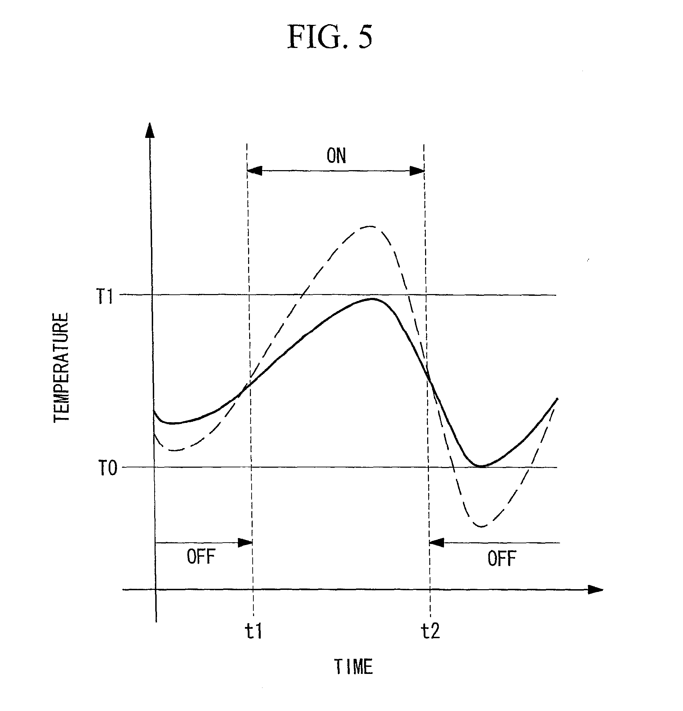

   Fig. 5 is a graph for explaining changes in the temperature of a generator main body in Fig. 2.
{Fig. 6}
   Fig. 6 is a block diagram for explaining another type control of the oil fan, the generator fan, the transformer fan, and the converter fan in Fig. 3.
{Fig. 7}
   Fig. 7 is a block diagram for explaining yet another type of control of the oil fan, the generator fan, the transformer fan, and the converter fan in Fig. 3.
{Fig. 8}
   Fig. 8 is a block diagram for explaining the control of a wind power generator according to a second embodiment of the present invention.
{Fig. 9}
   Fig. 9 is a graph for explaining changes with time in the temperature of an oil heat exchanger and the control of the oil fan.
{Fig. 10}
   Fig. 10 is a graph for explaining changes with time in the temperature of the generator main body and the control of the generator fan.

### {Description of Embodiments}

### First Embodiment

A wind power generator according to a first embodiment of the present invention will be described below with reference to Figs. 1 to 7.
Fig. 1 is an overall view illustrating the configuration of the wind power generator according to this embodiment.
As shown in Fig. 1, the wind power generator 1 performs wind power generation. The wind power generator 1 is provided with a tower 2 that is vertically erected on a base B, a nacelle (housing) 3 mounted on the upper end of the tower 2, a rotor head 4 mounted on the nacelle 3 so as to be rotatable about the substantially horizontal axis thereof, a head capsule 5 that covers the rotor head 4, a plurality of wind-turbine rotor blades (rotor blades) 6 mounted in a radial pattern about the rotation axis of the rotor head 4, a generator equipment 7 that generates electricity by the rotation of the rotor head 4, and an anemoscope/anemometer 9 that measures the wind direction and the wind speed in the vicinity of the wind power generator 1.

Although this embodiment is described when applied to an example in which three wind-turbine rotor blades 6 are provided, the number of the wind-turbine rotor blades 6 is not limited to three and may be two or more than three; it is not particularly limited.

As shown in Fig. 1, the tower 2 has a columnar structure extending upward (upward in Fig. 1) from the base B, for example, a structure in which a plurality of units are connected in the vertical direction. The nacelle 3 is provided at the uppermost portion of the tower 2. In the case where the tower 2 is constituted of the plurality of units, the nacelle 3 is mounted on the uppermost unit.

As shown in Fig. 1, the nacelle 3 rotatably supports the rotor head 4 and accommodates, in the interior thereof, generator equipment 7 that generates electricity by the rotation of the rotor head 4. Furthermore, an air intake port 8 that introduces outside air into the nacelle 3 is provided at the lower part at the front of the nacelle 3, that is, on the rotor head 4 side.

As shown in Fig. 1, the rotor head 4 is fitted with the plurality of wind-turbine rotor blades 6 extending in a radial pattern about the rotation axis, and the periphery is covered with a head capsule 5.

The rotor head 4 is provided with a pitch control unit (not shown) that rotates the wind-turbine rotor blades 6 about the axis of the wind-turbine rotor blades 6 to change the pitch angle of the wind-turbine rotor blades 6.
Thus, when wind blows against the wind-turbine rotor blades 6 from the direction of the rotation axis of the rotor head 4, a force that rotates the rotor head 4 about the rotation axis is generated at the wind-turbine rotor blades 6 to rotationally drive the rotor head 4.

Fig. 2 is a schematic diagram illustrating the configuration of the interior of the nacelle in Fig. 1.
As shown in Fig. 2, the generator equipment 7 accommodated in the nacelle 3 is provided with a main bearing 11 that rotatably supports a main shaft (not shown) that transmits the rotational driving force of the rotor head 4 to the generator 14, a gearbox 12 that accelerates the rotation of the rotor head 4 and transmits it to the generator 14, an oil cooler 13 that cools oil used for lubrication of the main bearing 11 and the gearbox 12, the generator 14 that generates electricity using the transmitted rotational driving force, a transformer 15 that controls the voltage of the generated electricity, and a converter 16 that controls the frequency.

The oil cooler 13 cools the lubricant oil that has become hot by lubricating the interior of the main bearing 11 and the gearbox 12.
The oil cooler 13 is provided with an oil heat exchanger (device) 21 that radiates the heat of the lubricant oil, an oil fan (cooler fan) 22 that supplies air into the oil heat exchanger 21, and an oil pipe 23 through which the lubricant oil circulates between the main bearing 11 and the oil heat exchanger 21, or between the gearbox 12 and the oil heat exchanger 21.

The generator 14 is provided with a generator main body (device) 31 that generates electricity, a generator fan (cooler fan) 32 that introduces air into the generator main body 31, and a generator duct 33 that guides the air introduced into the generator 14 to the outside of the nacelle 3.
The generator main body 31, the generator fan 32, and the generator duct 33 may be known ones and are not particularly limited.

The transformer 15 is provided with a transformer main body (device) 41 that converts the voltage and an opening 42 and a transformer fan (cooler fan) 43 for circulating air through the transformer main body 41.
The transformer main body 41, the opening, and the transformer fan 43 may be known ones and are not particularly limited.

The converter 16 is disposed at the rear (the right in Fig. 2) in the nacelle 3 and on a floor surface F of the nacelle 3.
The converter 16 is provided with a converter main body (device) 51 that converts the frequency and a converter fan (cooler fan) 52 that cools the converter main body 51.

The converter main body 51 is disposed in front (at the left in Fig. 2) of the converter fan unit 52 and on the floor surface F of the nacelle 3, in other words, in front of the converter fan unit 52 in the direction of the rotation axis L of a converter fan 54 in the converter fan unit 52.
The converter main body 51 may be known one and is not particularly limited.

The anemoscope/anemometer 9 measures the wind direction and the wind speed outside the nacelle 3. The anemoscope/anemometer 9 is disposed at the tip of a rod member disposed on the top face of the nacelle 3 behind the rotor blades 6 (at the left in Fig. 2) and extending upward (upward in Fig. 2) from the nacelle 3.
The wind direction and the wind speed measured by the anemoscope/anemometer 9 are output to a control unit 76, to be described below.

The anemoscope/anemometer 9 may be disposed either on the top face of the nacelle 3, as described above, or on a tower provided separately from the wind power generator 1; it is not particularly limited. The method of disposing the anemoscope/anemometer 9 on the separate tower is suitable for application to a wind farm equipped with a plurality of the wind power generators 1.

Fig. 3 is a block diagram illustrating the control of the oil fan, the generator fan, the transformer fan, and the converter fan in Fig. 2.
As shown in Fig. 3, the wind power generator 1 is further provided with a wind-power-generator fan unit 71 including an oil temperature sensor 72; a generator temperature sensor 73; a transformer temperature sensor 74; a converter temperature sensor 75; a control unit 76 that controls the oil fan 22, the generator fan 32, the transformer fan 43, and the converter fan 52 (hereinafter referred to as "oil fan 22 etc."); the oil fan 22; the generator fan 32; the transformer fan 43; and the converter fan 52.

As shown in Figs. 2 and 3, the oil temperature sensor 72 is a sensor that measures the temperature of the oil heat exchanger 21 of the oil cooler 13. The temperature of the oil heat exchanger 21 measured by the oil temperature sensor 72 is output to the control unit 76.

The generator temperature sensor 73 is a sensor that measures the temperature of the generator main body 31 of the generator 14. The temperature of the generator main body 31 measured by the generator temperature sensor 73 is output to the control unit 76.

The transformer temperature sensor 74 is a sensor that measures the temperature of the transformer main body 41 of the transformer 15. The temperature of the transformer main body 41 measured by the transformer temperature sensor 74 is output to the control unit 76.

The converter temperature sensor 75 is a sensor that measures the temperature of the converter main body 51 of the converter 16. The temperature of the converter main body 51 measured by the converter temperature sensor 75 is output to the control unit 76.

As shown in Figs. 2 and 3, the control unit 76 controls the oil fan 22 etc. on the basis of the temperatures of the oil heat exchanger 21, the generator main body 31, the transformer main body 41, and the converter main body 51 (hereinafter referred to as "oil heat exchanger 21 etc.") and the wind direction and the wind speed outside the nacelle 3.

The control unit 76 is provided with an operating-state estimating section 77 that estimates the operating state of the wind power generator 1, a temperature estimating section 78 that estimates the temperature gradients of the oil heat exchanger 21 etc., and a fan control section 79 that outputs control signals for the oil fan 22 etc.

The operating-state estimating section 77 estimates the percentages of full capacity of the oil heat exchanger 21 etc. by estimating the operating state of the wind power generator 1 on the basis of the wind direction and the wind speed input from the anemoscope/anemometer 9.

The temperature estimating section 78 estimates the temperature gradients of the oil heat exchanger 21 etc. on the basis of the percentages of full capacity of the oil heat exchanger 21 etc. estimated by the operating-state estimating section 77 and the temperatures of the oil heat exchanger 21 etc. input from the oil temperature sensor 72, the generator temperature sensor 73, and the transformer temperature sensor 74.

The fan control section 79 outputs control signals for the oil fan 22 etc. on the basis of the temperature gradients of the oil heat exchanger 21 etc. estimated by the temperature estimating section 78.

Next, a method for generating electricity with the wind power generator 1 having the above-described configuration will be described in outline. With the wind power generator 1, the force of the wind that blows against the wind-turbine rotor blades 6 from the direction of the rotation axis of the rotor head 4 is converted to a motive power to rotate the rotor head 4 about the rotation axis.

The rotation of the rotor head 4 is transmitted to the generator equipment 7, and the generator equipment 7 generates electric power matching an object to which the electric power is to be supplied, for example, alternating current with a frequency of 50 Hz or 60 Hz.
Here, to allow the wind force to effectively act on the wind-turbine rotor blades at least during power generation, the rotor head 4 is turned windward by appropriately rotating the nacelle 3 on a horizontal plane.

Next, the control of the wind-power-generator fan unit 71, which is a feature of this embodiment, will be described.

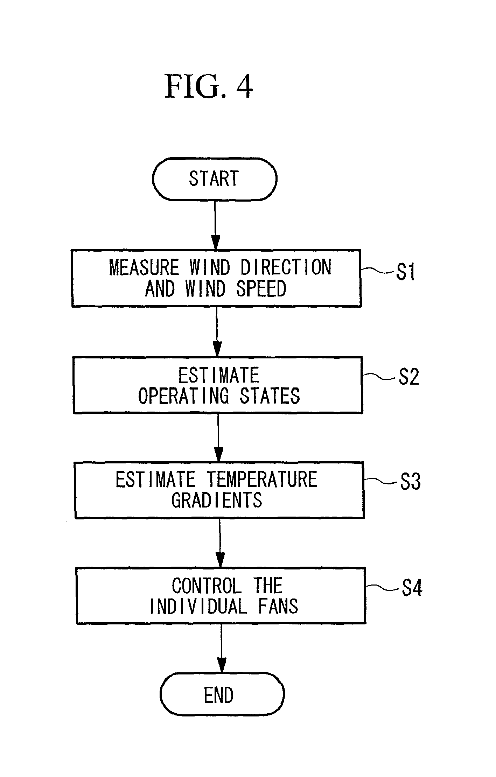

Fig. 4 is a flowchart for explaining the control of the wind-power-generator fan unit in Fig. 3
As shown in Fig. 4, the wind direction and the wind speed outside the nacelle 3 measured by the anemoscope/anemometer 9 are input to the control unit 76 of the wind-power-generator fan unit 71 (step S1).
The operating-state estimating section 77 of the control unit 76 estimates the percentages of full capacity of the oil heat exchanger 21 etc. on the basis of the input wind direction and wind speed (step S2). The estimation of the percentages of full capacity may be performed on the basis of either a data map that is stored in the operating-state estimating section 77 in advance or a calculation expression; it is not particularly limited.

After the percentages of full capacity of the oil heat exchanger 21 etc. have been estimated, next, the temperature gradients of the oil heat exchanger 21 etc. plotted against time are estimated by the temperature estimating section 78 (step S3).
For example, the temperature gradient of the oil heat exchanger 21 is estimated on the basis of the temperature of the oil heat exchanger 21 input from the oil temperature sensor 72, the amount of heat generated in the oil heat exchanger 21 corresponding to the percentage of full capacity, and the operating state of the oil fan 22. The amount of heat corresponding to the percentage of full capacity stored in the temperature estimating section 78 in advance is used as the amount of heat generated in the oil heat exchanger 21.
The temperature gradients of the generator main body 31, the transformer main body 41, and the converter main body 51 are also estimated by the temperature estimating section 78 as in the same way as in the case of the oil heat exchanger 21.

The fan control section 79 outputs control signals for controlling the operation of the oil fan 22 etc. on the basis of the temperature gradients of the oil heat exchanger 21 etc. estimated by the temperature estimating section 78 (step S4).

Fig. 5 is a graph for explaining changes in the temperature of the generator main body in Fig. 2.
For example, the case where the operation of the generator fan 32 is controlled will be described. As indicated by the solid line in Fig. 5, the fan control section 79 outputs an ON signal or an OFF signal to drive or stop the generator fan 32 on the basis of the temperature and the temperature gradient of the generator main body 31 so that the temperature of the generator main body 31 falls within a predetermined temperature range (T0 to T1 in Fig. 5).
Such control allows the temperature of the generator main body 31 to fall within the predetermined range, as compared with the case of controlling the generator fan 32 on the basis of only the temperature of the generator main body 31, as indicated by the dotted line.

With the above-described configuration, the control unit 76 can estimate the amounts of heat generated in the oil heat exchanger 21 etc. by estimating the operating states of the oil heat exchanger 21 etc. on the basis of the wind direction and the wind speed outside the nacelle 3. This allows the control unit 76 to further estimate changes with time in the temperatures of the oil heat exchanger 21 etc., that is, the temperature gradients of the oil heat exchanger 21 etc. on the basis of the temperatures of the oil heat exchanger 21 etc. measured by the oil fan 22 etc.

The control of the operation of the oil fan 22 etc. based on the estimated temperature gradients of the oil heat exchanger 21 etc. allows the operation of the oil fan 22 etc. to be appropriately controlled as compared with the method of control based on only the temperatures of the oil heat exchanger 21 etc., thereby preventing excessive consumption of driving power for the oil fan 22 etc. that cool the oil heat exchanger 21 etc. provided in the wind power generator 1.

For example, a delay in cooling shutdown of the oil fan 22 etc., that is, overcooling of the oil heat exchanger 21 etc., can be prevented. In other words, unnecessary operation of the oil fan 22 etc. can be prevented, and thus, the consumption of driving power for the oil fan 22 etc. can be reduced.
Furthermore, a delay in cooling startup of the oil fan 22 etc., that is, overheating of the oil heat exchanger 21 etc., can be prevented. In other words, the operating time of the oil fan 22 etc. can be reduced, and thus, the consumption of driving power by the oil fan 22 etc. can be reduced.

Fig. 6 is a block diagram for explaining another type of control of the oil fan, the generator fan, the transformer fan, and the converter fan in Fig. 3.
As described above, the oil fan 22 etc. may be controlled on the basis of the anemoscope/anemometer 9 and the results of measurement by the oil temperature sensor 72 etc., or alternatively, as shown in Fig. 6, the oil fan 22 etc. may be controlled on the basis of the rotational speed of the wind-turbine rotor blades 6, the pitch angle of the wind-turbine rotor blades 6, and the results of measurement by the oil temperature sensor 72 etc.; it is not particularly limited.

The rotational speed of the wind-turbine rotor blades 6 can be measured by measuring the rotation of the rotor head 4 or the main shaft. The pitch angle of the wind-turbine rotor blades 6 may be obtained by directly measuring the pitch angle of the wind-turbine rotor blades 6 or by detecting the output of the above-described pitch control unit; it is not particularly limited.

This allows the operating states of the oil fan 22 etc. to be ascertained without the use of the anemoscope/anemometer 9, thus permitting estimation of the amounts of heat generated in the oil fan 22 etc.

Fig. 7 is a block diagram for explaining yet another type of control of the oil fan, the generator fan, the transformer fan, and the converter fan in Fig. 3.
As described above, the oil fan 22 etc. may be controlled on the basis of the anemoscope/anemometer 9 and the results of measurement by the oil temperature sensor 72 etc., or alternatively, as shown in Fig. 7, the oil fan 22 etc. may be controlled on the basis of power output from the generator main body 31 and the results of measurement by the oil temperature sensor 72 etc.; it is not particularly limited.

This allows the operating states of the oil fan 22 etc. to be ascertained without the use of the anemoscope/anemometer 9, thus permitting estimation of the amounts of heat generated in the oil fan 22 etc.

### Second Embodiment

Next, a second embodiment of the present invention will be described with reference to Figs. 8 to 10.
The basic configuration of the wind power generator of this embodiment is the same as that of the first embodiment but differs from the first embodiment in the method for controlling the wind-power-generator fan unit. Therefore, in this embodiment, only the control of the wind-power-generator fan unit will be described with reference to Figs. 8 to 10, and descriptions of the other components will be omitted.
Fig. 8 is a block diagram for explaining the control of the wind power generator of this embodiment.
The same components as those in the first embodiment are given the same reference signs and their descriptions will be omitted.

As shown in Fig. 8, a wind-power-generator fan unit 171 of a wind power generator 101 of this embodiment is provided with the oil temperature sensor 72, the generator temperature sensor 73, the transformer temperature sensor 74, the converter temperature sensor 75, a control unit 176 that controls the oil fan 22 etc., the oil fan 22, the generator fan 32, the transformer fan 43, and the converter fan 52.

Here, the oil fan 22 is a fan having a larger capacity than the other fans, and the generator fan 32 and the transformer fan 43 are fans having a smaller capacity than the other fans. The converter fan 52 is a fan having an intermediate capacity between the oil fan 22 and both the generator fan 32 and the transformer fan 43.

As shown in Fig. 8, the control unit 176 controls the oil fan 22 etc. on the basis of the temperatures of the oil heat exchanger 21 etc. and the wind direction and the wind speed outside the nacelle 3.

The control unit 76 is provided with the operating-state estimating section 77 that estimates the operating state of the wind power generator 1, the temperature estimating section 78 that estimates the temperature gradients of the oil heat exchanger 21 etc., and a fan control section 179 that outputs control signals for the oil fan 22 etc.

Next, the control of the wind-power-generator fan unit 171, which is a feature of this embodiment, will be described.
The wind direction and the wind speed outside the nacelle 3 measured by the anemoscope/anemometer 9 are input to the control unit 176 of the wind-power-generator fan unit 171. Since the following processes up to the estimation of the temperature gradients of the oil heat exchanger 21 etc. plotted against time are the same as those of the first embodiment, their descriptions will be omitted.

The fan control section 179 controls the fans 22, 32, 42, and 52 on the basis of the estimated temperature gradients and the operating states of the fans 22, 32, 42, and 52, respectively.
The control of the oil fan 22 having a higher capacity than the other fans and the generator fan 32 having a smaller capacity than the other fans will be described below by way of example.

Fig. 9 is a graph for explaining changes with time in the temperature of the oil heat exchanger and the control of the oil fan. Fig. 10 is a graph for explaining changes with time in the temperature of the generator main body and the control of the generator fan.
Ta1 in Fig. 9 denotes the temperature of the oil heat exchanger 21 and the startup temperature of the oil fan 22, and Ta2 denotes the shutdown temperature of the oil fan 22. Tb1 in Fig. 10 denotes the temperature of the generator main body 31 and the startup temperature of the generator fan 32, and Tb2 denotes the shutdown temperature of the generator fan 32.

Since the temperatures of the oil heat exchanger 21 and the generator main body 31 during the period from time t10 to t11 in Figs. 9 and 10 are lower than the startup temperatures (Ta1 and Tb1) and higher than the shutdown temperatures (Ta2 and Tb2) of the fans, respectively, the oil fan 22 and the generator fan 32 are stopped (OFF).
Thereafter, during the period from time t11 to t12, the oil fan 22 is operated (ON) because the temperature of the oil heat exchanger 21 reaches the fan startup temperature (Ta1). On the other hand, the generator fan 32 maintains stopped (OFF) because the temperature of the generator main body 31 is lower than the fan startup temperature (Tb1).
The temperature of the oil heat exchanger 21 drops because it is cooled by the oil fan 22.

During the period from time t12 to t13, the generator fan 32 is operated (ON) because the temperature of the generator main body 31 reaches the fan startup temperature (Ta1). On the other hand, the fan control section 179 shuts down the oil fan 22 (OFF) even if the temperature is higher than the fan shutdown temperature (Ta2).

Therefore, the temperature of the generator main body 31 drops because the generator main body 31 is cooled by the generator fan 32. On the other hand, the temperature of the oil heat exchanger 21 rises because the cooling by the oil fan 22 is stopped.
The temperature of the generator main body 31 drops faster than the oil heat exchanger 21 because its heat capacity is smaller than that of the oil heat exchanger 21.

From time t13 on, the generator fan 32 is stopped (OFF) because the temperature of the generator main body 31 becomes lower than the fan shutdown temperature (Tb2). On the other hand, the operation of the oil heat exchanger 21 is started up (ON) in correspondence with the shutdown of the generator fan 32 because the oil heat exchanger 21 has been stopped, with its temperature being higher than the fan shutdown temperature (Ta2).

With the above-described configuration, the operation of one of the oil fan 22 etc. is controlled on the basis of the operating state of another fan. This can prevent reduction in the cooling efficiency of the oil heat exchanger 21 etc. due to the oil fan 22 etc. and can reduce the consumption of driving power for the oil fan 22 etc.

In a case where the ratios of loads of the oil fan 22 etc. to the oil heat exchanger 21 etc., that is, the ratios of the air-blowing capacities of the oil fan 22 etc., to the amounts of heat generated or heat capacities of the oil heat exchanger 21 etc. are individually different, for example, the operation of the generator fan 32 with a low load ratio is controlled on the basis of the operating state of the oil fan 22 with a high load ratio. This can reduce the influence of the pressure difference (negative pressure) between the interior and the exterior of the nacelle 3 caused by the operation of the oil fan 22 during the operation of the generator fan 32, thereby preventing reduction of the cooling efficiency of the generator fan 32.

Alternatively, by controlling the operation of the oil fan 22 with a high load ratio on the basis of the operating state of the generator fan 32 with a low load ratio, the influence of the pressure difference between the interior and the exterior of the nacelle 3 caused by the operation of the oil fan 22 on the operation of the generator fan 32 can be reduced, and thus reduction of the cooling efficiency of the generator fan 32 can be prevented.

The technical scope of the present invention is not limited to the above-described embodiments, and various modifications may be made without departing from the spirit of the present invention.

### {Reference Signs List}

- 1, 101:: wind power generator
- 3:: nacelle (housing)
- 6:: wind-turbine rotor blade (rotor blade)
- 9:: anemoscope/anemometer
- 21:: oil heat exchanger (device)
- 22:: oil fan (cooler fan)
- 31:: generator main body (device)
- 32:: generator fan (cooler fan)
- 41:: transformer main body (device)
- 43:: transformer fan (cooler fan)
- 51:: converter main body (device)
- 52:: converter fan (cooler fan)
- 71, 171:: wind-power-generator fan unit
- 76, 176:: control unit

## Claims

1. A wind-power-generator fan unit comprising:
a cooler fan that discharges air in a housing, which accommodates a device that performs at least power generation by rotational operation of rotor blades, to an outside of the housing through the device; and
a control unit that controls operation of the cooler fan on a basis of a temperature of the device and an operating state of the device.

2. The wind-power-generator fan unit according to Claim 1, wherein the control unit estimates the operating state of the device on a basis of results of measurement by an anemoscope/anemometer that measures a wind direction and a wind speed outside the housing and controls the operation of the cooler fan.

3. The wind-power-generator fan unit according to Claim 1, wherein the control unit estimates the operating state of the device on a basis of a rotational speed of the rotor blades and a pitch angle of the rotor blades and controls the operation of the cooler fan.

4. The wind-power-generator fan unit according to Claim 1, wherein the control unit estimates the operating state of the device on a basis of power output from the device and controls the operation of the cooler fan.

5. The wind-power-generator fan unit according to any one of Claims 1 to 4, wherein
the cooler fan is provided for each of a plurality of the devices; and
the control unit controls the operation of one of the cooler fans on a basis of the operating state of another of the cooler fans.

6. A wind-power-generator fan unit comprising:
a plurality of cooler fans, for a plurality of devices that performs at least power generation by rotational operation of rotor blades, that discharges air in a housing accommodating the devices to an outside of the housing through the devices; and
a control unit that controls operation of one of the cooler fans on a basis of a temperature of the device and an operating state of another of the cooler fans.

7. A wind power generator comprising:
a rotor blade that is driven by wind;
a device that performs at least power generation by rotational operation of the rotor blade;
a housing that accommodates the device in an interior thereof; and
a wind-power-generator fan unit according to any one of Claims 1 to 6.
